# EUROPÄISCHE PATENTSCHRIFT

(11) **EP 3 499 192 B1**
(45) Veröffentlichungstag und Bekanntmachung des Hinweises auf die Patenterteilung: **11.10.2023**
(21) Anmeldenummer: 18203628.5
(22) Anmeldetag: 31.10.2018
(51) Int. Cl.: G01C 21/36

(54) **NAVIGATIONSVORRICHTUNG**
NAVIGATION DEVICE
DISPOSITIF DE NAVIGATION

(30) Priorität: 02.11.2017 DE 102017125625
(43) Veröffentlichungstag der Anmeldung: 19.06.2019
(73) Patentinhaber: Contagt GmbH, 68159 Mannheim (DE)
(72) Erfinder: Britsch, Johannes, 69115 Heidelberg (DE); Brandt, Stephan, 60594 Frankfurt am Main (DE); Bartz, Niklas, 64625 Bensheim (DE)
(74) Vertreter: Daub, Thomas

(56) Entgegenhaltungen:
- US-A1- 2010 138 156
- US-A1- 2015 134 241
- US-B1- 6 255 989

## Beschreibung

### Stand der Technik

Die Erfindung geht aus von einer Navigationsvorrichtung nach dem Oberbegriff des Anspruchs 1.

Aus der US 2015/0134241 A1, der US 6 255 989 B1 und der US 2010/0138156 A1 sind jeweils Navigationsvorrichtungen bekannt, welche ein Ortspseudonym mit zweidimensionalen Ortsdaten eines Orts verknüpfen, anhand welcher eine Navigation und/oder Berechnung einer Route stattfindet.

Die Aufgabe der Erfindung besteht insbesondere darin, eine gattungsgemäße Vorrichtung mit verbesserten Eigenschaften hinsichtlich einer Navigationsfähigkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Navigationsvorrichtung mit zumindest einer Datenbankumgebung umfassend zumindest ein Benutzermodul, das Benutzerdaten zumindest eines Benutzers aufweist, zumindest ein Pseudonymisierungsmodul, mittels welchem wenigstens mit zumindest Benutzerdaten des Benutzers verknüpftes Ortspseudonym festlegbar ist, und zumindest ein Ortsmodul, welches das zumindest eine Ortspseudonym mit Ortsdaten zumindest eines Orts verknüpft, wobei das Ortspseudonym mittels des Pseudonymisierungsmoduls von dem Benutzer festlegbar ist. Hierdurch kann vorteilhaft eine Navigation verbessert werden. Insbesondere kann eine Komplexität einer Navigation für einen Benutzer verringert werden, da anstelle einer komplexen Adresse und/oder Anschrift zur Bestimmung eines anzunavigierenden Ortes ein Ortspseudonym genutzt werden kann. Dabei kann vorteilhaft zum einen eine Nutzbarkeit der Navigation insbesondere durch eine gestalterische Freiheit bei einer Wahl des Ortspseudonyms durch den Benutzer verbessert werden und weiter vorteilhaft zum anderen einer Wiedererkennbarkeit und/oder eine Merkbarkeit verbessert werden kann. Ganz besonders vorteilhaft kann eine Genauigkeit einer Navigation erhöht werden, da das mit dem Ort verknüpfte Ortspseudonym eine genauere Ortung zulässt, als dies beispielsweise ein Adressenstandard zulässt. Vorzugsweise können mittels des derartig festgelegten Ortspseudonyms verknüpfte Orte selbst innerhalb von Gebäuden aufgefunden und/oder annavigiert werden, so dass vorteilhaft Lieferungen direkt an den Ort des Benutzers erfolgen können. Zudem kann eine hohe Sicherheit bei einer Navigation erreicht werden, da die Navigation anonymisiert anhand des Ortspseudonyms erfolgt, und somit die reale Adresse oder Anschrift eines Benutzers nicht ausgetauscht und somit geheim gehalten werden können.

Unter einer "Navigationsvorrichtung" soll insbesondere eine Vorrichtung verstanden werden, welche zu einer Navigation vorgesehen ist. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Denkbar ist, dass die Navigationsvorrichtung ein Bestandteil eines Navigationsgeräts ist. Die Navigationsvorrichtung ist insbesondere zu einer Bereitstellung eines Navigationsservices, wie insbesondere eines Kartenservices, wie beispielsweise zur Ausgabe eines bestimmten Orts auf einer Karte, eines Transportservices, wie beispielsweise zu einem autonomen Fahren, und/oder zu einem Lieferservice, wie beispielsweise zur Anlieferung von Gütern, vorgesehen.

Die Navigationsvorrichtung umfasst insbesondere zumindest einen und vorzugsweise mehrere insbesondere separat voneinander ausgebildete Server. Unter einem "Server" soll insbesondere ein Computer verstanden werden, welcher/welches zumindest eine insbesondere nicht flüchtige Speichereinheit und/oder zumindest eine Recheneinheit aufweist, und welcher Funktionalitäten, wie insbesondere Programme, Daten oder andere Ressourcen vorzugsweise über ein Netzwerk bereitstellt. Vorzugsweise befindet sich die Navigationsvorrichtung zumindest teilweise, und zwar insbesondere der zumindest eine Server der Navigationsvorrichtung, in einem, vorzugsweise zugangsbeschränkten und/oder besonders gesicherten Raum. Ferner ist denkbar, dass sich die Server der Navigationsvorrichtung in verschiedenen voneinander separaten zugangsbeschränkten und/oder besonders gesicherten Räumen befinden. Bevorzugt ist der Server als ein virtueller Server, einen Cloud-Server oder dergleichen ausgebildet.

Ganz besonders vorteilhafte Eigenschaften hinsichtlich einer Navigierbarkeit können durch ein Navigationssystem erzielt werden, welches die Navigationsvorrichtung umfasst, sowie zumindest eine externe Einheit und/oder zumindest eine Transporteinheit. Die externe Einheit und/oder die Transporteinheit sind über ein Netzwerk mit der Navigationsvorrichtung verbunden. Unter einer "externen Einheit", soll insbesondere eine Einheit verstanden werden, welche von der Navigationsvorrichtung verschieden ausgebildet ist. Bei der externen Einheit kann es sich insbesondere um einen Computer, wie insbesondere einen Heimcomputer, ein Laptop oder dergleichen, und/oder ein Handgerät handeln, wie beispielsweise ein Navigationsgerät, ein Smartphone, eine Smartwatch, ein Tablet oder dergleichen, welches insbesondere anhand einer MAC Adresse und/oder einer IP-Adresse innerhalb eines Netzwerks identifizierbar ist. Die externe Einheit ist insbesondere dazu vorgesehen über das Netzwerk Daten mit der Navigationsvorrichtung auszutauschen. Unter einer "Transporteinheit" soll insbesondere eine Einheit verstanden werden, welche zum Transport von Personen und/oder Gütern vorgesehen ist. Bei der Transporteinheit kann es sich insbesondere um eine Transportbox und/oder ein insbesondere eine Transportbox umfassendes Fahrzeug, insbesondere Transport- und/oder Lieferfahrzeug handeln. Das Fahrzeug ist insbesondere als ein Landfahrzeug, vorzugsweise als ein Wasserfahrzeug und besonders bevorzugt als ein Luftfahrzeug, ausgebildet.

Unter einer "Datenbankumgebung" soll insbesondere eine Einheit verstanden werden, welche zumindest eine insbesondere relationale Datenbank und vorzugsweise mehrere insbesondere separat voneinander ausgebildete insbesondere relationale Datenbanken umfasst, in welcher/welchen Daten, wie insbesondere die Benutzerdaten, Ortsdaten Ortspseudonymdaten, hinterlegbar, abrufbar und/oder veränderbar sind. Insbesondere ist die Datenbank und/oder sind die Datenbanken auf dem Server und/oder den insbesondere separat voneinander ausgebildeten Servern hinterlegt. Vorzugsweise umfasst die Navigationsvorrichtung je Datenbank einen Server, so dass vorteilhaft je eine Datenbank auf je einem Server hinterlegt ist, und somit in Datenbanken hinterlegte Informationen nicht nur virtuell sondern auch räumlich getrennt sind. Besonders bevorzugt ist die Datenbank, insbesondere die Datenbanken der Datenbankumgebung verschlüsselt und vorzugsweise zugangsbeschränkt. Insbesondere ist die Datenbankumgebung mit einem, vorzugsweise Nutzerbeschränktem, Netzwerk, wie beispielsweise dem Internet oder einem Intranet verbunden. Die Datenbankumgebung umfasst insbesondere zumindest ein Datenbankmanagement. Unter einem "Datenbankmanagement" soll insbesondere ein Programm, insbesondere ein Betriebssystem, verstanden werden, welches dazu vorgesehen ist, Daten in der Datenbank zu hinterlegen, abzurufen und/oder zu verändern. Das Datenbankmanagement weist vorzugsweise eine Datenbanksprache auf, wie beispielsweise SQL, insbesondere MySQL, MariaDB, Oracle Database oder dergleichen. Vorzugsweise weist die Datenbankumgebung zumindest eine oder mehrere Schutzkomponenten auf. Die Schutzkomponente ist vorzugsweise Teil des Datenbankmanagements. Die Schutzkomponente ist insbesondere dazu vorgesehen, die Datenbankumgebung gegenüber einem Angriff und/oder Eindringen, insbesondere gegenüber dem Netzwerk, zu schützen, wie beispielsweise gegen einen Datenraub, einen Virenbefall, einen DDoS-Angriff oder dergleichen. Die Schutzkomponente weist insbesondere eine Firewall, ein "Intrusion Detection System" (IDS) und/oder ein "Intrusion Prevention System" (IPS) auf.

Unter einem "Modul", wie insbesondere dem Ortsmodul, dem Pseudonymisierungsmodul, dem Benutzermodul oder dergleichen, soll insbesondere ein Teil der Datenbankumgebung verstanden werden, in welchem zumindest ein Datensatz, welcher in der Datenbank umfasst ist, hinterlegbar, abrufbar und/oder variierbar ist. Ein Modul bildet insbesondere eine Datenbank der Datenbankumgebung zumindest teilweise, vorzugsweise zumindest einem Großteil und besonders bevorzugt vollständig aus. Denkbar ist, dass verschiedene Module auf in verschiedenen Datenbanken und somit insbesondere verschiedenen Servern hinterlegt sind. Vorzugsweise sind Module insbesondere mittels der Schutzkomponente des Datenbankmanagements verschlüsselt. Besonders bevorzugt sind die Module der Datenbankumgebung zu einer verschlüsselten Kommunikation miteinander vorgesehen, wobei insbesondere ein Relation und/oder Verknüpfungen der verschiedenen Module und ihrer Datensätze untereinander von dem Datenbankmanagement festgelegt sind. Unter einem "Datensatz" soll insbesondere eine Gruppe von insbesondere zusammenhängenden Daten verstanden werden, welche insbesondere von einem Datentyp sind, wie beispielsweise vom Typ Ortsdaten, Benutzerdaten, Pseudonymisierungsdaten oder dergleichen.

Unter einem "Benutzermodul" soll insbesondere ein Modul verstanden werden, welches zumindest einen Datensatz vom Typ Benutzerdaten zumindest eines Benutzers umfasst.

Der Benutzerdatensatz bildet insbesondere zumindest teilweise, vorzugsweise zumindest zu einem Großteil und besonders bevorzugt vollständig, ein Benutzerkonto des zumindest einen Benutzers aus. Das Benutzerkonto ist insbesondere von einem Benutzer, insbesondere bei einer Erstnutzung und/oder einem Registriervorgang in dem Benutzermodul erstellbar. Insbesondere dazu stellt das Datenmanagement eine grafische Oberfläche und insbesondere eine Eingabemaske für den Benutzer zur Verfügung, welche zur Eingabe der in dem Benutzerdatensatz hinterlegbaren Benutzerdaten vorgesehen ist. Unter "Benutzerdaten" sollen insbesondere Daten verstanden werden, welche Informationen umfassen, die einen, insbesondere einzigen, Benutzer, insbesondere einzigartig und vorzugsweise verwechslungsfrei im Vergleich zu weiteren Benutzern identifizieren. Die Benutzerdaten umfassen insbesondere Identitätsinformationen des Benutzers, wie insbesondere Anrede, Geschlecht, Vorname, Nachname, Geburtsdatum, Wohnsitz, Beruf, Arbeitsplatz, Zahlungskonten, Benutzername, Benutzerpasswort, Benutzerfoto des Benutzers oder dergleichen. Insbesondere ist der Benutzername des Benutzers frei festlegbar, vorzugsweise solange dieser einzigartig im Vergleich zu weiteren Benutzernamen weitere in dem Benutzermodul hinterlegter Benutzernamen ist. Ferner ist denkbar, dass die Datenbankumgebung, insbesondere das Benutzermodul, mit einem sozialen Netzwerk, wie beispielsweise Facebook^{®}, Google Plus^{®}, einer Online-Plattform, wie beispielsweise Amazon^{®}, Ebay^{®}, einer Spiele-Plattform oder dergleichen, verknüpfbar ist, um dort bereits hinterlegte Benutzerdaten und insbesondere Benutzerkonten auszutauschen, insbesondere zu importieren und/oder zu exportieren. Insbesondere ist das Benutzermodul vorzugsweise verschlüsselt kommunizierend mit weiteren Modulen der Datenbankumgebung verbunden, wie beispielsweise dem Ortsmodul und/oder dem, Pseudonymisierungsmodul.

Unter einem "Ortsmodul" soll ein Modul verstanden werden, welches zumindest einen Datensatz vom Typ Ortsdaten zumindest eines Orts umfasst. Das Ortsmodul bildet insbesondere zumindest teilweise, vorzugsweise zumindest zu einem Großteil und besonders bevorzugt vollständig, das Benutzerkonto des zumindest einen Benutzers aus. Über das Benutzerkonto sind insbesondere die jeweiligen Datensätze des Ortmoduls und des Benutzermoduls eines Benutzers miteinander verknüpft. Insbesondere der Ort, welcher vorzugsweise von dem Ortsdatensatz anhand der Ortsdaten definiert ist, ist insbesondere von einem Benutzer festlegbar. Beispielsweise kann es sich bei dem Ort um einen Wohnort, einen Arbeitsort, einen Transportort, einen Lieferort, einen Veranstaltungsort oder dergleichen handeln. Unter "Ortsdaten" sollen Daten verstanden werden, welche Informationen umfassen, die eine Position eines Orts, insbesondere einzigartig und vorzugsweise verwechslungsfrei im Vergleich weiterer Orte definieren, wie Ortskoordinaten und/oder insbesondere Ortsinformationen des Orts. Die Positionsdaten umfassen als Ortsinformationen Informationen des Orts, wie beispielsweise eine Anschrift und/oder Adresse des Orts, welche insbesondere Informationen zu einem Land, einer Straße, einer Hausnummer und/oder einem Postfach des Orts umfassen kann. Ferner können Positionsdaten insbesondere weitere Zusatzinformationen umfassen, wie beispielsweise ein Stockwerk, eine Zimmernummer oder dergleichen. Besonders bevorzugt umfassen die Ortsdaten insbesondere als Ortskoordinaten Breiten- und Längenangaben, sowie eine Höhenangabe, wie beispielsweise in Form einer GPS-Adresse. Denkbar ist, dass die grafische Oberfläche eine Karte generiert, auf welcher der Ort zunächst abhängig von den Ortsinformationen markiert ist, wobei ein Benutzer den Ort durch Eingabe der Ortskoordinaten spezifizieren kann. Alternativ oder zusätzlich ist denkbar, dass der Ort und insbesondere die Ortsinformation und/oder die Ortskoordinaten von der Datenbankumgebung mittels einer mit dem Benutzer verknüpften externen Einheit und/oder Transporteinheit automatisch bestimmt und insbesondere spezifiziert werden kann/können, wie beispielsweise durch eine Ortung. Insbesondere mittels der externen Einheit und/oder der Transporteinheit ist eine Ortung über GNSS, durch Funkquellen, insbesondere Erkennung und Triangulation von W-LAN-Netzwerken, Bluetooth, Ultraschall oder dergleichen denkbar. Zur Ortung sind Sensoren der externen Einheit und/oder der Transporteinheit nutzbar, wie beispielsweise eines Kompasses und/oder einer Kamera, welche zu einer Kameraerkennung eines Orts dienen kann. Beispielsweise kann ein Ort mittels, sich insbesondere an dem Ort befindlichen Marker, wie beispielsweise ein RFID-Tag, ein NFC-Tags, QR-Codes, Funksignale, welcher insbesondere Teil des Navigationssystems ist, geortet und insbesondere spezifiziert werden. Insbesondere zu einer Nachverfolgung eines Orts der externen Einheit und/oder der Transporteinheit ist es denkbar, dass diese mit einem Marker, wie beispielsweise ein RFID-Tag, ein NFC-Tag und/oder QR-Code, versehen ist.

Der Ortsdatensatz ist dreidimensional und umfasst insbesondere zweidimensionale Ortskoordinaten einer Longitude und einer Latitude des Orts, also beispielsweise einen Längengrad und einen Breitengrad. Insbesondere ist das Ortsmodul vorzugsweise verschlüsselt kommunizierend mit weiteren Modulen der Datenbankumgebung verbunden, wie beispielsweise dem Benutzermodul und/oder dem Pseudonymisierungsmodul.

Unter einem "Pseudonymisierungsmodul" soll insbesondere ein Modul verstanden werden, welches zumindest einen Datensatz vom Typ Pseudonymisierungsdaten zumindest eines Pseudonyms umfasst. Das Pseudonymisierungsmodul bildet insbesondere zumindest teilweise, vorzugsweise zumindest zu einem Großteil und besonders bevorzugt vollständig, das Benutzerkonto des zumindest einen Benutzers aus. Über das Benutzerkonto sind insbesondere die jeweiligen Datensätze des Positionsmoduls, des Benutzermoduls und des Pseudonymisierungsmoduls eines Benutzers miteinander verknüpft. Unter einem "Ortspseudonym" soll insbesondere ein Pseudonym verstanden werden, welcher einen, insbesondere einzigen, Ort, insbesondere einzigartig und vorzugsweise verwechslungsfrei im Vergleich zu weiteren Orten pseudonymisiert. Das Ortspseudonym ist insbesondere von einem Benutzer frei festlegbar. Zusätzlich ist es denkbar, dass das Ortspseudonym automatisch generierbar ist, insbesondere mittels des Datenbankmanagements. Insbesondere dazu stellt das Datenmanagement eine grafische Oberfläche und insbesondere eine Eingabemaske für den Benutzer zur Verfügung, welche zur Eingabe des festzulegenden Ortspseudonyms und/oder zur Ausgabe des automatisch generierten Ortspseudonyms vorgesehen ist. Das Pseudonymisierungsmodul sieht insbesondere vor, dass das Ortspseudonym aus zumindest einem Buchstaben, wobei insbesondere zwischen Groß- und Kleinbuchstaben unterscheiden wird, vorzugsweise aus zumindest einem Wort, zumindest einem Sonderzeichen und/oder einer Kombination dieser zusammensetzbar ist. Denkbar ist, dass das Ortspseudonym einen den mit Ihm verknüpften Ort beschreibenden Begriff insbesondere als eine vorzugsweise vorgegebene Subadresse, wie beispielsweise "home", "work", einen Firmennamen und/oder mit dem jeweiligen Benutzer verknüpften Namen des Benutzers umfassen kann, wie beispielsweise, "Alice", "Bob" oder dergleichen. Insbesondere für den Fall, dass ein Benutzer von selbst keinen Begriff, insbesondere keine Subadresse zuordnet, schlägt die Datenbankumgebung dem Benutzer eine Subadresse vor und/oder verknüpft diese selbstständig. Das Pseudonymisierungsmodul ist vorzugsweise verschlüsselt kommunizierend mit weiteren Modulen der Datenbankumgebung verbunden, wie beispielsweise dem Benutzermodul und/oder dem Ortsmodul.

Ferner umfasst die Navigationsvorrichtung zumindest ein Verlaufsmodul. Unter einem "Verlaufsmodul" soll insbesondere ein Modul verstanden werden, welches zumindest einen Datensatz vom Typ Verlaufsdaten umfasst. Unter Verlaufsdaten sollen insbesondere zeitlich veränderliche Daten, als ein zeitlicher Verlauf von Daten verstanden werden, welche insbesondere über einen Zeitraum gesammelte Ortsdaten und Pseudonymisierungsdaten eines Benutzers umfasst. Insbesondere ist das Verlaufsmodul vorzugsweise verschlüsselt kommunizierend mit weiteren Modulen der Datenbankumgebung verbunden, wie beispielsweise dem Benutzermodul, dem Ortsmodul und/oder dem Pseudonymisierungsmodul.

Das Ortsmodul umfasst wenigstens einen zumindest dreidimensionalen Ortsdatensatz. Hierdurch kann vorteilhaft eine Navigation verbessert werden. Ganz besonders vorteilhaft kann eine Genauigkeit einer Navigation erhöht werden, da das mit dem Ort verknüpfte Ortspseudonym eine genauere Ortung zulässt, als dies beispielsweise ein Adressenstandard zulässt. Vorzugsweise können mittels des derartig festgelegten Ortspseudonyms verknüpfte Orte selbst innerhalb von Gebäuden aufgefunden und/oder annavigiert werden, so dass vorteilhaft Lieferungen direkt an den Ort des Benutzers erfolgen können. insbesondere kann eine Komplexität einer Navigation für einen Benutzer verringert werden, da anstelle einer komplexen Adresse und/oder Anschrift zur Bestimmung eines anzunavigierenden Ortes ein Ortspseudonym genutzt werden kann. Dabei kann vorteilhaft zum einen eine Nutzbarkeit der Navigation insbesondere durch eine gestalterische Freiheit bei einer Wahl des Ortspseudonyms durch den Benutzer verbessert werden und weiter vorteilhaft zum anderen eine Widererkennbarkeit und/oder eine Merkbarkeit verbessert werden kann. Zudem kann eine hohe Sicherheit bei einer Navigation erreicht werden, da die Navigation anonymisiert anhand des Ortspseudonyms erfolgt, und somit reale Adresse oder Anschrift eines Benutzers nicht ausgetauscht und somit geheim gehalten werden können. Bei der Altitude handelt es sich insbesondere um eine Höhe des Orts, insbesondere eine Höhe relativ zu Normalhöhennull (gemäß DHHN2016). Denkbar ist, dass die Altitude direkt als eine Ortskoordinate, beispielsweise mittels GNSS angegeben wird. Ferner ist es denkbar, dass die Altitude aus einer Ortsinformation und/oder einer Zusatzinformation berechenbar ist.

Um insbesondere eine Navigationsangabe weiter zu vereinfachen wird ferner vorgeschlagen, dass das Ortsmodul vorsieht den Ort mit einem Standort innerhalb eines Gebäudes zu verknüpfen. Insbesondere für diesen Fall kann als Zusatzinformation ein Gebäudename oder verschiedene Gebäudeeigenschaften berücksichtigt werden, wie beispielsweise eine Größe des Gebäudes, insbesondere eine Grundfläche, eine Stockwerksanzahl, eine Zimmeranzahl oder dergleichen. Das Ortsmodul berücksichtigt zur Ermittlung einer in dem Ortsdatensatz hinterlegten Altitude eine Stockwerksangaben des dem Ort verknüpften Gebäudes. Hierdurch kann vorteilhaft eine Navigation weiter vereinfacht werden, wobei insbesondere die Altitude aus der Stockwerksangabe berechenbar ist. Die Stockwerksangabe ist dabei insbesondere als Zusatzinformation des Ortsdatensatzes hinterlegt.

Es wird ferner vorgeschlagen, dass das Ortsmodul dazu vorgesehen ist, dasselbe Ortspseudonym zeitabhängig und/oder kontextabhängig mit verschiedenen Orten zu verknüpfen. Es kann vorteilhaft eine Erreichbarkeit weitere verbessert werden. Insbesondere für diesen Fall bilden die Ortsdaten einen vierdimensionalen Ortsdatensatz, in welchem insbesondere zusätzlich zu der Longitude, der Latitude und der Altitude, eine Zeitinformation und zwar insbesondere eine Uhrzeit und/oder ein Zeitintervall umfasst ist. Denkbar ist, dass die Zeitinformation von dem Benutzer hinterlegt ist. Alternativ oder zusätzlich kann die Zeitinformation anhand der Verlaufsdaten mittels des Verlaufmoduls automatisch bestimmbar sein.

Es wird ferner vorgeschlagen, dass das Ortsmodul dazu vorgesehen ist, den mit dem Ortspseudonym verknüpften Ort in Abhängigkeit von einem aktuellen Standort des Benutzers anzupassen. Es kann vorteilhaft eine stetige Erreichbarkeit und/oder Zugänglichkeit gegenüber einer eines Benutzers für eine etwaige Navigation erreicht werden. Insbesondere ist denkbar, dass ein Standort des Benutzers insbesondere in Echtzeit von der externen Einheit und/oder der Transporteinheit geortet wird und insbesondere in dem Ortsdatensatz aktualisiert wird. Alternativ oder zusätzlich ist der Standort insbesondere in Echtzeit in dem Verlaufsdatensatz hinterlegbar. Insbesondere für den Fall, dass ein Ort in Abhängigkeit eines aktuellen Standorts angepasst ist, ist das Ortspseudonym durch den Begriff "@live" und/oder durch das insbesondere Sonderzeichen "@" in Kombination mit einer zufällig generierten Zeichenfolge, wie beispielsweise "@sdfji985450ijsdfser93" gekennzeichnet.

Darüber hinaus wird vorgeschlagen, dass die Navigationsvorrichtung zumindest ein Kodiermodul aufweist, welches dazu vorgesehen ist, die Ortsdaten als zumindest einen Ortscode zu kodieren. Unter einem "Ortscode" soll eine Kette von Buchstaben und/oder Symbolen und/oder Zahlen verstanden werden, welche die Ortsdaten in einer, bevorzugt durch Recheneinheiten, lesbaren Form repräsentiert. Unter einer "Recheneinheit" soll insbesondere eine Einheit verstanden werden, welche dazu vorgesehen ist, arithmetische und/oder logische Funktionen auszuführen. Insbesondere weisen Smartphones, Laptops und Computer Recheneinheiten auf. Vorteilhaft ist der Ortscode offline-dekodierbar. Darunter, dass der Ortscode "offline-dekodierbar" ist, soll insbesondere verstanden werden, dass der Ortscode unabhängig von Netzwerken, welche beispielsweise Infrarotverbindungen und/oder Funkverbindungen und/oder Bluetoothverbindungen und/oder Datenleitungen aufweisen können, lesbar ist. Hierdurch kann insbesondere eine Flexibilität erhöht werden. Vorteilhaft kann die Navigationsvorrichtung für den Fall, dass der Benutzer über kein Internet verfügt, anstelle der Ortspseudonyme auf Ortscodes zurückgreifen.

Um insbesondere eine Verwechslung von Orten anhand der Ortspseudonyme auszuschließen, wird ferner vorgeschlagen, dass das Pseudonymisierungsmodul, in welchem das zumindest eine Ortspseudonym hinterlegt ist, dazu vorgesehen ist durch einen Abgleich mit weiteren Ortspseudonymen eine Einzigartigkeit des Ortspseudonyms sicherzustellen. Insbesondere für den Fall, dass bei einer Wahl eines Ortspseudonyms, insbesondere durch einen Benutzer das gewählte Ortspseudonym bereits in dem Pseudonymisierungsmodul hinterlegt ist, ist dieses dazu vorgesehen den Benutzer darauf hinzuweisen. Ferner ist das Pseudonymisierungsmodul dazu vorgesehen, dem Benutzer insbesondere für diesen Fall ein alternatives, insbesondere dem vom Benutzer vorgegebenen ähnlichen, Ortspseudonym vorzuschlagen.

Es wird ferner vorgeschlagen, dass das Pseudonymisierungsmodul dazu vorgesehen ist, das Ortspseudonym zumindest aus einem führenden Sonderzeichen gefolgt von zumindest einem Wort zusammenzusetzen. Hierdurch kann eine Merkbarkeit des Ortspseudonyms weiter verbessert werden. Unter einem "führenden Sonderzeichen" soll insbesondere ein Sonderzeichen verstanden werden, welches zu Beginn des Ortspseudonyms steht. Ferner kann das Ortspseudonym weitere Sonderzeichen, Buchstaben, Worte, sowie insbesondere deren Kombinationen umfassen.

Es wird ferner vorgeschlagen, dass mittels des Pseudonymisierungsmodul zumindest 50¹⁰ einzigartige Ortspseudonyme festlegbar sind. Vorzugsweise sind mittels des Pseudonymisierungsmoduls zumindest 55¹⁰ und besonders bevorzugt zumindest 60¹⁰ einzigartige Ortspseudonyme festlegbar. Hierdurch kann vorteilhaft eine Vielfältigkeit einer Auswahl des Ortspseudonyms erreicht werden. Weiter vorteilhaft kann eine notwendig hohe Anzahl von ortspseudonymen bereitgestellt werden, um eine für eine Navigation notwendig hohe Auflösung von Orten sicherzustellen. Ferner sind mittels des Ortspseudonyms, insbesondere aufgrund der Anzahl möglicher Ortspseudonyme, eine Ortsauflösung einer über das Ortspseudonym mit zumindest einer Genauigkeit von 1 m, vorzugsweise mit zumindest einer Genauigkeit von 1 dm und besonders bevorzugt mit einer Genauigkeit von 1 cm, insbesondere je Dimension des Ortsdatensatzes.

Es wird ferner vorgeschlagen, dass das Pseudonymisierungsmodul dazu vorgesehen ist, Ortspseudonyme und/oder Orte verschiedener Benutzer miteinander zu kombinieren und/oder zu verknüpfen. Es kann vorteilhaft eine Handhabung, insbesondere in Hinblick auf verschiedene Navigationsmöglichkeiten der Ortspseudonyme verbessert werden. Insbesondere kann durch eine Kombination der Ortspseudonyme verschiedener Benutzer eine Route zwischen Orten der verschiedenen Benutzer bestimmt werden, welche beispielsweise zu einem Transport, Anreise und/oder einer Lieferung genutzt werden kann. Beispielsweise ist es denkbar, dass zwei Ortspseudonyme zu diesem Zweck über eine Sodnerzeichen, wie insbesondere "/" miteinander verbindbar sind. Ferner ist denkbar, dass Ortspseudonyme hierarchisch kombinierbar sind, um einen Ort genauer zu definieren. Beispielsweise könnte ein hierarchisch übergeordnetes Ortspseudonym, wie beispielsweise ein Ortspseudonym, welches einem Benutzerkonto einer Institution und/oder Gebäudes zugeordnet ist, mit einem hierarchisch untergeordneten Ortspseudonym eines Benutzerkontos einer Person, welcher sich bei dieser Institution und/oder in dem Gebäude aufhält kombiniert werden, um vorteilhaft dessen Standort genauer zu definieren. Beispielsweise könnten hierarchische Ortspseudonyme durch ein Sonderzeichen miteinander verknüpfbar sein, wie beispielsweise über das Sonderzeichen "@". Insbesondere diesem Zusammenhang wird das Ortspseudonym mit einer niedrigeren Hierarchie vor das Ortspseudonym mit einer höheren Hierarchie gehängt.

Es wird ferner vorgeschlagen, dass zumindest mittels des Pseudonymisierungsmoduls und insbesondere mittels des Ortsmoduls der mit dem Ortspseudonym verknüpfte Ort auf einer dreidimensionalen Karte darstellbar ist. Hierdurch kann eine Navigation weiter verbessert werden. Bei der Karte handelt es sich insbesondere um eine virtuelle Karte, welche beispielsweise auf einem Display, insbesondere auf einem Display der externen Einheit anziehbar ist. Besonders bevorzugt handelt es sich bei der Karte um eine virtuelle Realitätskarte, welche in eine reale Umgebung einblendbar ist.

Es wird ferner vorgeschlagen, dass das Pseudonymisierungsmodul Ortspseudonyme verschiedener Benutzer einander austauschbar macht. Hierdurch kann eine Funktionalität der Navigation weiter verbessert werden. Es ist denkbar, dass das Pseudonymisierungsmodul eine Austauschbarkeit von Ortspseudonymen in verschiedenen Stufen vorsieht. Beispielsweise ist vorgesehen in einer ersten Stufe ein Ortspseudonym mit allen Benutzern der Datenbankumgebung austauschbar zu machen. Ferner kann eine zweite Stufe vorgesehen sein, in welcher nur bestimmte Benutzer, wie beispielsweise bestimmte Benutzer einer Benutzergruppe eine Austauschbarkeit vorgesehen ist. Um einen Austausch zu vereinfachen, sieht die Datenbankumgebung insbesondere vor zu jedem hinterlegten Ort ein URL zu erstellen, welche universell austauschbar ist.

Zumindest mittels des Pseudonymisierungsmoduls ist eine Route zwischen zumindest zwei verschiedenen Orten, welche mit zumindest zwei verschiedenen dreidimensionalen Ortsdatensätzen der jeweiligen Ortspseudonyme verknüpft sind ausgebbar. Hierdurch kann eine Navigation verbessert werden, da erfindungsgemäß nicht nur zweidimensionale Daten zur Bestimmung der schnellsten Route berücksichtigt werden, sondern auch dreidimensionale Daten. Insbesondere kann zur Ausgabe die dreidimensionale Karte Anwendung finden.

Um eine Sicherheit weiter zu steigern, wird vorgeschlagen, dass die Navigationsvorrichtung zumindest ein Verkettungsmodul aufweist, welches die Route durch eine manipulationssichere Verknüpfung der Ortsdatensätze und/oder Ortspseudonyme der Orte festlegt. Darunter, dass die Verknüpfung "manipulationssicher" ist, soll insbesondere verstanden werden, dass es nach der Verknüpfung für einen Benutzer unmöglich ist, die Route für andere Benutzer unbemerkbar zu manipulieren. Unter einer "Manipulation" soll insbesondere ein Verändern und/oder Austauschen der Ortspseudonyme und/oder Ortsdatensätze der Route und/oder ein Hinzufügen weiterer Ortspseudonyme und/oder Ortsdatensätze zur Route nach der Verknüpfung verstanden werden. Denkbar wäre, dass die Route durch eine Alarmfunktion vor Manipulationen gesichert ist. Alternativ könnten Manipulationen der Route blockiert sein, beispielsweise durch eine automatische Verschlüsselung der Route bei der Verknüpfung. Bevorzugt machen jegliche Manipulationen der Route selbige für sämtliche Benutzer unbenutzbar. Insbesondere kann ein autorisierter Benutzer eine Verknüpfung der Route lösen und die Route im Anschluss an das Lösen der Verknüpfung manipulieren. Vorteilhaft kann der autorisierte Benutzer die manipulierte Route als eine neue Route verknüpfen und den Benutzern zur Verfügung stellen. Vorteilhaft kann die Verknüpfung unter Verwendung von zumindest dem zuletzt verknüpften Ortsdatensatz und/oder Ortspseudonym und der Route gelöst werden. Besonders vorteilhaft weist die Navigationsvorrichtung zumindest ein Lösungsmodul auf, welches ein Lösen der Verknüpfung bereitstellt. Bevorzugt hindern jegliche Manipulationen der Route das Lösungsmodul am Lösen der Verknüpfung. Zu einer weiteren Erhöhung der Sicherheit könnte eine Benutzung der Route ein vorheriges Entfernen einer weiteren Verschlüsselung der Route erfordern. Beispielsweise könnte der autorisierte Benutzer die Route verschlüsseln und ausgewählten weiteren Benutzern den Schlüssel zur Verfügung stellen. Hierdurch kann vermieden werden, dass unerwünschte Benutzer bei Erhalt der Route selbige benutzen können. Vorteilhaft können einzelne Benutzer gewählt werden, welche die Route benutzen können.

Es wird ferner vorgeschlagen, dass das Ortsmodul vorsieht Sensordaten eines mit dem Benutzer verknüpften externen Einheit und/oder eines Transporteinheit zur Bestimmung und/oder Abgleich des mit dem Ortspseudonym verknüpften Ortsdatensatzes zu verwenden. Es kann vorteilhaft eine Genauigkeit einer Ortsbestimmung verbessert werden. Ferner ist denkbar, dass eine mit dem Benutzer verknüpfte externe Einheit und/oder eine Transporteinheit, als Benutzerinformation in dem Benutzermodul hinterlegt ist. Insbesondere ist denkbar, dass die Karte für einen Benutzer auf der externen Einheit anzeigbar ist.

In einer besonders bevorzugten Ausgestaltung der Erfindung wird vorgeschlagen, dass die Transporteinheit als eine Drohne, insbesondere eine autonome Drohne, ausgebildet ist. Hierdurch kann ein schneller Transportservice, und/oder Lieferservice bereitgestellt werden, wobei auch eine Navigation mittels eines dreidimensionalen Ortsdatensatzes erfolgt. Beispielsweise ist denkbar, dass eine als Drohne ausgebildete Transporteinheit eine Lieferung direkt an einen Balkon eines mit dem Ort verknüpften Gebäudes zustellt.

Es wird ferner vorgeschlagen, dass die externe Einheit und/oder die Transporteinheit zumindest eine Sensoreinheit umfasst, welche zumindest einen Sensor zur Erfassung der Sensordaten umfasst, welcher zu einer Ortung vorgesehen ist. Hierdurch kann vorteilhaft ein Zusammenspiel der Komponenten des Navigationssystems zur Navigation verbessert werden. Vorzugsweise können die externe Einheit und/oder die Transporteinheit mehrere Sensoren aufweisen. Die mehreren Sensoren können dabei voneinander verschieden ausgebildet sein. Insbesondere können weitere Sensoren vorgesehen sein, welche nicht zu einer reinen Ortung vorgesehen sein können. Die Sensoren sind insbesondere an verschiedenen Stellen und/oder in verschiedenen Blickwinkeln positioniert sind. Der Sensor ist insbesondere als ein elektromagnetischer Sensor, wie beispielsweise als ein Funksensor ausgebildet. Bevorzugt ist der Sensor als ein Kompass ausgebildet. Besonders bevorzugt ist der Sensor als ein GNSS-Sensor ausgebildet. Ferner kann der Sensor als ein Kamera-Sensor ausgebildet sein.

Es wird ferner vorgeschlagen, dass die Datenbankumgebung zumindest teilweise als Programmteil in ein Computerprogramm integrierbar ist. Es kann vorteilhaft eine Navigation weiter verbessert werden. Die Datenbankumgebung umfasst insbesondere eine Schnittstelle, vorzugsweise Programmierschnittstelle, wie beispielsweise eine Schnittstelle zur Anwendungsprogrammierung (engl. Application Programming Interface - API), ein Software Development Kit, welcher vorzugsweiser Teil des Datenbankmanagements ist, mittels welcher die Datenbankumgebung in ein Computerprogramm integrierbar ist. Beispielsweise sind das Computerprogramm und/oder die Programmierschnittstelle mittels der externen Einheit und/oder der Transporteinheit abrufbar. Bei dem Computerprogramm handelt es sich vorzugsweise um eine App. Die Programmierschnittstelle ist insbesondere dazu vorgesehen Zugriff auf die Module und/oder die Datenbanken der Datenbankumgebung bereitzustellen. Ferner ist denkbar, dass die Programmierschnittstelle eine grafische Benutzeroberfläche bereitstellt und/oder bei einer Bereitstellung einer grafischen Benutzeroberfläche unterstützt.

Des Weiteren wird ein Verfahren zur Navigation, insbesondere mittels der Navigationsvorrichtung und/oder des Navigationssystems, vorgeschlagen bei welchem in zumindest einem Verfahrensschritt von einem Benutzer wenigstens ein mit zumindest dessen Benutzerdaten verknüpftes Ortspseudonym festgelegt wird und in zumindest einem Verfahrensschritt das zumindest eine Ortspseudonym mit Ortsdaten zumindest eines Orts verknüpft wird.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Navigationssystem mit einer Navigationsvorrichtung, einer externen Einheit und einer Transporteinheit in einer schematischen Darstellung,
- Fig. 2: einen Teil des Navigationssystems mit der Navigationsvorrichtung in einer schematischen Darstellung,
- Fig. 3: einen schematischen Ablaufplan eines Teils eines Betriebsverfahrens des Navigationssystems,
- Fig. 4: einen schematischen Ablaufplan eines Teils eines Betriebsverfahrens des Navigationssystems und

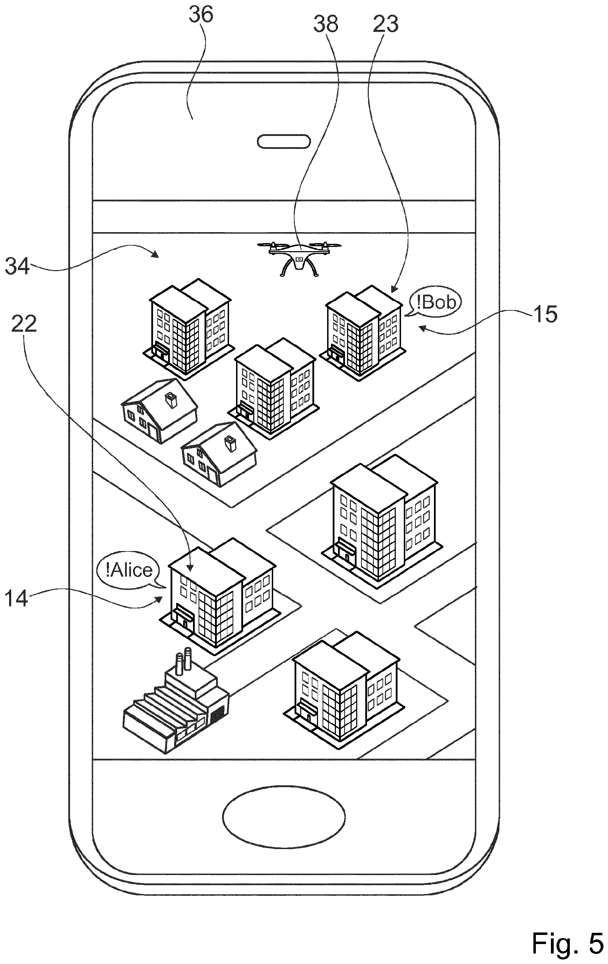

- Fig. 5: eine beispielhafte Navigation mittels des Navigationssystems anhand einer dreidimensionalen Karte.

### Beschreibung des Ausführungsbeispiels

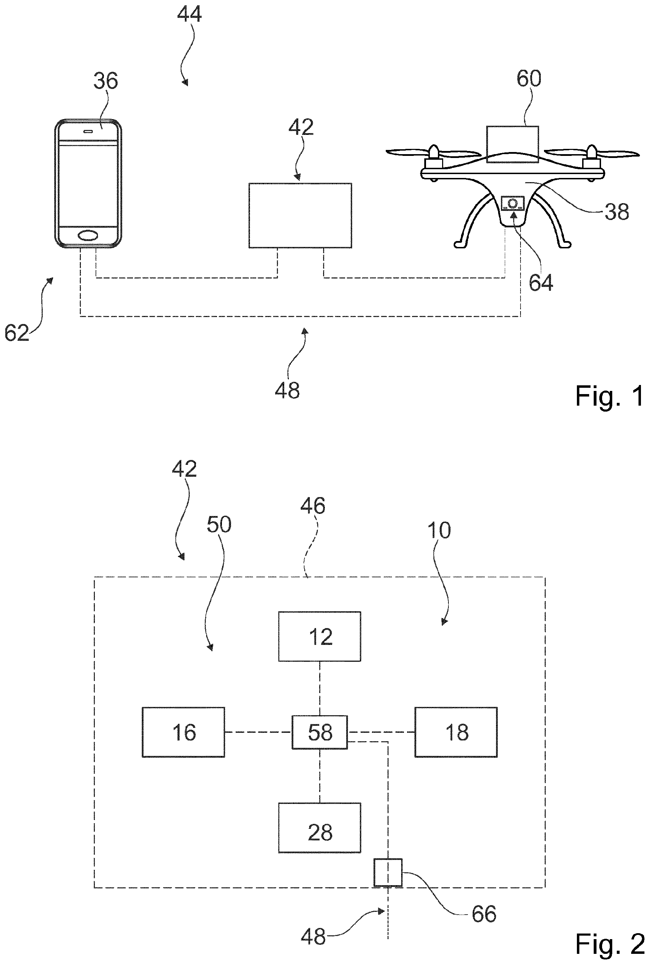

Figur 1 zeigt ein Navigationssystem 44 in einer schematischen Darstellung. Das Navigationssystem 44 umfasst eine Navigationsvorrichtung 42. Die Navigationsvorrichtung 42 ist zu einer Navigation vorgesehen. Die Navigationsvorrichtung 42 kann ein Bestandteil eines Navigationsgeräts (nicht dargestellt) sein. Die Navigationsvorrichtung 42 ist zu einer Bereitstellung eines Navigationsservices, wie insbesondere eines Kartenservices, wie beispielsweise zur Ausgabe eines bestimmten Orts 22 auf einer Karte 34 vorgesehen. Ferner ist die Navigationsvorrichtung 42 zu einer Bereitstellung eines Transportservice, wie beispielsweise zu einem autonomen Fahren, und/oder zu einem Lieferservice, wie beispielsweise zur Anlieferung von Gütern, vorgesehen.

Komponenten des Navigationssystems 44 sind mit einem Netzwerk 48 vorzugsweise miteinander verbunden, wie beispielsweise dem Internet. Alternativ oder zusätzlich ist es denkbar, dass das Navigationssystem 44 mit einem Intranet verbunden ist. Insbesondere für diesen Fall bildet das Navigationssystem 44 zumindest teilweise, vorzugsweise zumindest zu einem Großteil und besonders bevorzugt vollständig das Netzwerk 48 aus.

Ferner weist das Navigationssystem 44 eine externe Einheit 36 auf (siehe Figur 1). Im vorliegenden Fall umfasst das Navigationssystem 44 mehrere externe Einheiten 36. Der Übersichtlichkeit halber ist in den Figuren nur eine externe Einheit 36 dargestellt und mit einem Bezugszeichen versehen. Im Folgenden wird die externe Einheit 36 beschrieben. Die Beschreibung ist auf weitere externe Einheiten 36 unmittelbar übertragbar. Die externe Einheit 36 ist von der Navigationsvorrichtung 42 verschieden ausgebildet. Im vorliegenden Fall ist die externe Einheit 36 als ein Smartphone ausgebildet. Es ist denkbar, dass es sich bei der externen Einheit 36 um einen Computer, wie insbesondere ein Heimcomputer, ein Laptop oder dergleichen, und/oder ein Handgerät handeln kann, wie beispielsweise ein Navigationsgerät, ein Smartphone, eine Smartwatch, ein Tablet oder dergleichen. Die externe Einheit 36 ist dazu vorgesehen, über das Netzwerk 48 Daten mit der Navigationsvorrichtung 42 auszutauschen. Die externe Einheit 36 ist über das Netzwerk 48, welches insbesondere anhand einer MAC Adresse und/oder einer IP-Adresse innerhalb eines Netzwerks 48, identifizierbar ist.

Die externe Einheit 36 weist zumindest eine Sensoreinheit 62 auf. Die Sensoreinheit 62 umfasst zumindest einen Sensor welcher zu einer Ortung vorgesehen ist. Die Sensoreinheit 62 ist zur Erfassung von Sensordaten vorgesehen. Im vorliegenden Fall umfasst die Sensoreinheit 62 mehrere insbesondere verschieden ausgebildete Sensoren. Zudem kann die Sensoreinheit 62 zur redundanten Auslegung und damit insbesondere zur Steigerung einer Betriebssicherheit mehrere gleiche Sensoren umfassen. Ferner umfasst die Sensoreinheit 62 weitere Sensoren, welche nicht zu einer Ortung vorgesehen sein können. Die Sensoren sind insbesondere an verschiedenen Stellen und/oder in verschiedenen Blickwinkeln der externen Einheit 36 angeordnet und/oder positioniert. Die Sensoreinheit 62 umfasst zumindest einen Sensor, welcher als ein elektromagnetischer Sensor, wie beispielsweise als ein Funksensor ausgebildet ist. Ferner umfasst die Sensoreinheit 62 zumindest einen Sensor, welcher als ein Kompass ausgebildet ist. Ferner umfasst die Sensoreinheit 62 zumindest einen Sensor welcher als ein GNSS-Sensor ausgebildet ist. Ferner umfasst die Sensoreinheit 62 zumindest einen Sensor, welcher als ein Kamera-Sensor ausgebildet ist.

Die externe Einheit 36 ist über das Netzwerk 48 mit weiteren Komponenten des Navigationssystems 44 verbunden, insbesondere mit der Navigationsvorrichtung 42.

Zudem weist das Navigationssystem 44 eine Transporteinheit 38 auf (siehe Figur 1). Im vorliegenden Fall umfasst das Navigationssystem 44 mehrere Transporteinheiten 38. Der Übersichtlichkeit halber ist in den Figuren nur eine Transporteinheit 38 dargestellt und mit einem Bezugszeichen versehen. Im Folgenden wird die Transporteinheit 38 beschrieben. Die Beschreibung ist auf weitere Transporteinheiten 38 unmittelbar übertragbar. Die Transporteinheit 38 ist zu einem Transport von Personen und/oder Gütern vorgesehen. Bei der Transporteinheit 38 kann es sich um eine Transportbox 60 und/oder ein insbesondere eine Transportbox 60 umfassendes Fahrzeug, insbesondere Transport- und/oder Lieferfahrzeug handeln. Das Fahrzeug könnte insbesondere als ein Landfahrzeug, vorzugsweise als Wasserfahrzeug und besonders bevorzugt als ein Luftfahrzeug, ausgebildet. Im vorliegenden Fall handelt es sich bei der Transporteinheit 38 um ein Fahrzeug, insbesondere ein Luftfahrzeug, welche eine Transportbox 60 umfasst. Die Transportbox 60 ist zu einer Aufnahme von Gütern vorgesehen. Ferner ist die Transporteinheit 38 im vorliegenden Fall als eine Drohne ausgebildet. Die Transporteinheit 38 ist dazu vorgesehen bei einer Navigation von der Navigationsvorrichtung 42 zumindest unterstützt zu werden.

Die Transporteinheit 38 weist zumindest eine Sensoreinheit 64 auf. Im vorliegenden Fall ist die Sensoreinheit 64 äquivalent zu der Sensoreinheit 62 ausgebildet.

Die Transporteinheit 38 ist über das Netzwerk 48 mit weiteren Komponenten des Navigationssystems 44 verbunden, insbesondere mit der Navigationsvorrichtung 42 und vorteilhaft mit der externen Einheit 36.

Figur 2 zeigt einen Teil der Navigationsvorrichtung 42 des Navigationssystems 44 in einer schematischen Darstellung (vgl. Figur 1). Die Navigationsvorrichtung 42 weist zumindest einen Server 46 auf. Im vorliegenden Fall weist die Navigationsvorrichtung 42 einen, insbesondere einen einzigen, Server 46 auf. Der Server 46 ist im vorliegenden Fall als ein Computer ausgebildet. Der Server 46 umfasst zumindest eine insbesondere nicht flüchtige Speichereinheit (nicht dargestellt). In der Speichereinheit sind Daten, Datensätze, Datenbanken, Programme oder dergleichen hinterlegbar, abrufbar und/oder variierbar. Ferner umfasst der Server 46 umfasst zumindest eine Recheneinheit (nicht dargestellt). Mittels der Recheneinheit sind Programme, insbesondere in der Speichereinheit hinterlegte Programme ausführbar. Der Server 46 stellt Funktionen, wie insbesondere Programme, Daten oder andere Ressourcen bereit. Der Server 46 ist mit dem Netzwerk 48 verbunden. Über das Netzwerk 48 stellt der Server 46 die Funktionen bereit. Es ist denkbar, dass die Navigationsvorrichtung 42 eine von der hier aufgeführten abweichenden für einen Fachmann vorteilhafte Anzahl an Servern 46 umfasst. Alternativ kann es sich bei dem Server 46 um einen virtuellen Server handeln, wie beispielsweise einen Cloud-Server.

Die Navigationsvorrichtung 42 weist eine Datenbankumgebung 10 auf. Die Datenbankumgebung 10 ist zumindest teilweise auf dem Server 46 implementiert. Im vorliegenden Fall ist die Datenbankumgebung 10 vollständig auf dem Server 46 implementiert. Die Datenbankumgebung 10 umfasst zumindest eine Datenbank 50, in welcher Daten und/oder Datensätze hinterlegbar, abrufbar und/oder variierbar sind. Im vorliegenden Fall umfasst die Datenbankumgebung 10 eine, insbesondere einzige, Datenbank 50. Alternativ ist es denkbar, dass die Datenbankumgebung 10 mehrere Datenbanken umfasst und/oder sich aus mehreren Datenbanken zumindest teilweise zusammensetzt.

Ferner weist die Datenbankumgebung 10 zumindest ein Datenbankmanagement 58 auf. Das Datenbankmanagement 58 ist dazu vorgesehen in der Datenbank 50 enthaltene Daten und/oder Datensätze zu verwalten und zwar insbesondere zu verknüpfen, abzufragen, auszuwerten, zu hinterlegen, zu variieren. Das Datenbankmanagement 58 weist zumindest eine Datenbanksprache auf, wie beispielsweise SQL, insbesondere MySQL, MariaDB, Oracle Database oder dergleichen. Ferner stellt das Datenbankmanagement 58 diese Daten und/oder Datensätze weiteren Programmen, wie beispielsweise einer App, zur Verfügung.

Insbesondere dazu umfasst die Datenbankumgebung 10 zumindest eine Schnittstelle 66. Die Schnittstelle 66 ist eine Programmierschnittstelle, wie beispielsweise eine Schnittstelle zur Anwendungsprogrammierung (engl. Application Programming Interface - API) und/oder ein Software Development Kit, mittels welcher die Datenbankumgebung 10 in ein Computerprogramm integrierbar ist. Beispielsweise ist das Computerprogramm und/oder die Schnittstelle 66 mittels der externen Einheit 36 und/oder der Transporteinheit 38 abrufbar. Bei dem Computerprogramm handelt es sich vorzugsweise um eine App. Die Schnittstelle 66 ist dazu vorgesehen, Zugriff auf Komponenten der Datenbankumgebung 10 bereitzustellen, wie beispielsweise auf Daten, Datensätze und/oder Module der Datenbankumgebung 10. Ferner ist denkbar, dass die Schnittstelle 66 eine grafische Benutzeroberfläche bereitstellt und/oder zumindest das Computerprogramm bei einer Bereitstellung einer grafischen Benutzeroberfläche unterstützt.

Die Datenbankumgebung 10 ist mit dem Netzwerk 48 verbunden. Im vorliegenden Fall ist die Datenbankumgebung 10 über den Server 46 mit dem Netzwerk 48 verbunden. Zum Schutz der Datenbankumgebung 10 weist diese zumindest eine Schutzkomponente (nicht dargestellt) auf. Die Schutzkomponente ist insbesondere Teil des Datenbankmanagements 58. Alternativ könnte die Schutzkomponente von dem Datenbankmanagement 58 separat ausgebildet sein. Die Schutzkomponente ist dazu vorgesehen, die Datenbankumgebung 10 gegenüber einem Angriff und/oder Eindringen, insbesondere gegenüber dem Netzwerk 48, zu schützen. Beispielsweise schützt die Schutzkomponente die Datenbankumgebung 10 gegen Datenraub, einen Virenbefall, DDoS-Angriff oder dergleichen. Die Schutzkomponente weist insbesondere eine Firewall, ein "Intrusion Detection System" (IDS) und/oder ein "Intrusion Prevention System" (IPS) auf.

Die Datenbankumgebung 10 und vorzugsweise deren Komponenten, wie beispielsweise Daten, Datensätze und/oder Module der Datenbankumgebung 10 sind verschlüsselt. Die Schutzkomponente weist eine Kryptographiefunktion auf, welche die Datenbankumgebung 10, insbesondere die Datenbank 50, Datensätze, der Datenbankumgebung 10 und/oder den Server 46 verschlüsselt, und insbesondere zugangsbeschränkt. Die Schutzkomponente sieht verschiedene Zugangsebenen für verschiedene Benutzer 14, 15 der Datenbankumgebung 10 vor. Beispielsweise sind für einen Administrator der Datenbankumgebung 10 sämtliche Komponenten der Datenbankumgebung 10 zugänglich. Ferner ist denkbar, dass die Schutzkomponente einzelne Server 46 und/oder Datenbanken 50 verschlüsselt und/oder vorsieht, dass diese lediglich verschlüsselt miteinander kommunizieren. Insbesondere zur besonderen Sicherung befinden sich die Datenbankumgebung 10 und insbesondere der Server 46 in einem, zugangsbeschränkten und/oder besonders gesicherten Raum. Alternativ ist denkbar, dass für den Fall, dass die Navigationsvorrichtung 42 mehrere Server 46 umfasst, diese Server 46 sich in verschiedenen voneinander separaten zugangsbeschränkten und/oder besonders gesicherten Räumen befinden.

Die Datenbankumgebung 10 umfasst zumindest ein Benutzermodul 12. Das Benutzermodul 12 ist Teil der Datenbank 50. In dem Benutzermodul 12 sind Benutzerdaten hinterlegbar. Das Benutzermodul 12 weist Benutzerdaten zumindest eines Benutzers 14 auf. Die Benutzerdaten des Benutzers 14 bilden einen Benutzerdatensatz aus. Im vorliegenden Fall weist die Benutzerdatenbank Benutzerdatensätze mehrerer verschiedener Benutzer 14, 15 auf. Im Folgenden werden die Funktionen der Navigationsvorrichtung 42 anhand eines Benutzers 14 sowie eines weiteren Benutzer 15 beschrieben. Die Beschreibung ist auf zusätzliche Benutzer der Navigationssystems 44 übertragbar.

Das Benutzermodul 12 bildet zumindest teilweise ein Benutzerkonto eines Benutzers 14 aus. Der in dem Benutzermodul 12 hinterlegte Benutzerdatensatz umfasst Benutzerdaten, welche Benutzerinformationen umfassen, die den Benutzer 14 verwechslungsfrei im Vergleich zum weiteren Benutzer 14 definieren. Die Benutzerdaten umfassen Identitätsinformationen des Benutzers 14. Als Identitätsinformation umfassen die Benutzerdaten Anrede, Geschlecht, Vorname, Nachname, Geburtsdatum, Wohnsitz, Beruf, Arbeitsplatz, Zahlungskonten und/oder Benutzername des Benutzers 14. insbesondere ist der Benutzername des Benutzers 14 frei festlegbar, vorzugsweise solange dieser einzigartig im Vergleich zu weiteren Benutzernamen weitere in dem Benutzermodul 12 hinterlegten Benutzern 14, 15 ist. Dazu gleicht das Benutzermodul 12 die Benutzerdaten der Benutzer 14, insbesondere deren Benutzerdatensätze, miteinander ab. Ferner kann das Benutzermodul 12 mit einem sozialen Netzwerk, wie beispielsweise wie beispielsweise Facebook^{®}, Google Plus^{®}, einer Online-Plattform, wie beispielsweise Amazon^{®}, Ebay^{®}, einer Spiele-Plattform oder dergleichen, und insbesondere einem dem Benutzer 14 gehörenden Benutzername und/oder mit diesem verknüpften Benutzerkonto des verknüpfbar sein. Durch die Verknüpfung sind Benutzerdaten austauschbar und zwar insbesondere importierbar und/oder exportierbar, und/oder übernehmbar sind. Das Benutzermodul 12 ist verschlüsselt kommunizierend mit weiteren Modulen der Datenbankumgebung 10 verbunden, wie beispielsweise einem Ortsmodul 18 der Datenbankumgebung 10. Ferner kann der Benutzerdatensatz Informationen zu einer externen Einheit 36 und/oder einer Transporteinheit 38 umfassen, welche dem Benutzer 14 zugeordnet ist.

Die Datenbankumgebung 10 weist zumindest ein Ortsmodul 18 auf. Das Ortsmodul 18 umfasst zumindest einen Datensatz vom Typ Ortsdaten zumindest eines Orts 22. Das Ortsmodul 18 bildet insbesondere zumindest teilweise, vorzugsweise zumindest zu einem Großteil und besonders bevorzugt vollständig, das Benutzerkonto des zumindest einen Benutzers 14 aus. Über das Benutzerkonto sind jeweiligen Datensätze des Ortsmoduls 18 und des Benutzermoduls 12 des Benutzers 14 miteinander verknüpft. Der Ort 22 welcher von dem Ortsdatensatz anhand der Ortsdaten definiert ist, ist von dem Benutzer 14 festlegbar. Beispielsweise ist der Ort 22 ein Wohnort, ein Arbeitsort, einen Transportort, einen Lieferort, einen Veranstaltungsort oder dergleichen. Ortsdaten umfassen Informationen, die eine Position eines Orts 22, insbesondere einzigartig und vorzugsweise verwechslungsfrei im Vergleich weiterer Orte definieren, wie Ortskoordinaten und/oder insbesondere Ortsinformationen des Orts 22. Die Ortsdaten umfassen als Ortsinformationen Informationen des Orts 22, wie beispielsweise eine Anschrift und/oder Adresse des Orts 22. Die Adresse umfasst dabei Informationen zu einem Land, einer Straße, einer Hausnummer und/oder einem Postfach des Orts 22. Ferner umfassen Ortsdaten insbesondere weitere Zusatzinformationen. Die Ortsdaten umfassen als Zusatzinformationen ein Stockwerk, eine Zimmernummer oder dergleichen. Als Ortskoordinaten umfassen die Ortsdaten Breiten- und Längenangaben, sowie eine Höhenangabe. Die Ortskoordinaten liegen dabei in Form einer GNSS-Adresse, insbesondere gemäß WGS 84 (World Geodetic System 1984) vor.

Die Navigationsvorrichtung 42 weist ein Kodiermodul (nicht dargestellt) auf. Das Kodiermodul ist dazu vorgesehen, die Ortsdaten als einen Ortscode zu kodieren. Das Kodiermodul kodiert die Ortskoordinaten in Form einer Kette von Buchstaben. Alternativ könnte das Kodiermodul die Ortskoordination in Form einer Kette von Symbolen und/oder Zahlen kodieren.

Denkbar ist, dass das Ortsmodul 18 vorsieht zu einer Eingabe der Ortsdaten eine grafische Oberfläche in Form einer Karte 34 zu generieren. Auf der Karte 34 kann der Ort 22 zunächst abhängig von den Ortsinformationen markiert sein. Der Benutzer kann dann den Ort 22 durch Eingabe der Ortskoordinaten spezifizieren.

Alternativ oder zusätzlich ist denkbar, dass der Ort 22 und insbesondere die Ortsinformation und/oder die Ortskoordinaten von der Datenbankumgebung 10 mittels einer mit dem Benutzer 14 verknüpften externen Einheit 36 und/oder Transporteinheit 38 automatische bestimmt und insbesondere spezifiziert werden kann. Dazu ist die Datenbankumgebung 10 dazu vorgesehen eine Ortung durchzuführen. Zur Ortung nutzt die Datenbankumgebung 10 die Sensoreinheit 62, 64 der externen Einheit 26 und/oder der Transporteinheit 38. Beispielsweise ist eine Ortung mittels der Sensoreinheit 62, 64 über GNSS, durch Funkquellen, insbesondere Erkennung und Triangulation von W-LAN-Netzwerken, Bluetooth, Ultraschall oder dergleichen durchführbar. Ferner kann durch Abgleich mit der Sensoreinheit 62, 64 ein Ort 22mittels, sich insbesondere an dem Ort 22 befindlichen Marker, wie beispielsweise ein RFID-Tag, ein NFC-Tag, QR-Code, Funksignale, welcher insbesondere Teil des Navigationssystems 44 ist, geortet und insbesondere spezifiziert werden.

Das Ortsmodul 18 sieht vor den Ort 22 mit einem Standort innerhalb eines Gebäudes zu verknüpfen. Dazu berücksichtigt das Ortsmodul 18 als Zusatzinformation verschiedene Gebäudeeigenschaften, wie beispielsweise ein Gebäudename, eine Größe des Gebäudes, insbesondere eine Grundfläche, eine Stockwerksanzahl, eine Zimmeranzahl oder dergleichen. Das Ortsmodul 18 ist zur Ermittlung einer in dem Ortsdatensatz dazu vorgesehen eine hinterlegte anhand einer Stockwerksangaben des dem Ort 22 verknüpften Gebäudes zu berücksichtigen. Dabei berechnet das Ortsmodul 18 das anhand der Stockwerksangabe eine Altitude, also insbesondere eine Höhe des Orts 22, vorzugsweise relativ zu Normalhöhennull.

Die Datenbankumgebung 10 weist umfasst zumindest ein Pseudonymisierungsmodul 16 auf. Das Pseudonymisierungsmodul 16 umfasst zumindest einen Datensatz vom Typ Pseudonymisierungsdaten zumindest eines Pseudonyms umfasst. Das Pseudonymisierungsmodul 16 bildet zumindest teilweise, vorzugsweise zumindest zu einem Großteil und besonders bevorzugt vollständig, das Benutzerkonto des zumindest einen Benutzers 14 aus. Über das Benutzerkonto sind insbesondere die jeweiligen Datensätze des Positionsmoduls, des Benutzermoduls 12 und des Pseudonymisierungsmoduls 16 eines Benutzers 14 miteinander verknüpft. Das Ortspseudonym pseudonymisiert einen, insbesondere einzigen, Ort 22, insbesondere einzigartig und vorzugsweise verwechslungsfrei im Vergleich zu weiteren Orten. Das Ortspseudonym ist von dem Benutzer 14 frei festlegbar. Alternativ oder zusätzlich ist es denkbar, dass das Ortspseudonym automatisch generierbar ist, insbesondere mittels des Datenbankmanagements 58. Das Datenbankmanagement 58 stellt eine grafische Oberfläche und/oder eine Eingabemaske für den Benutzer 14 zur Verfügung, welche zur Eingabe des festzulegenden Ortspseudonyms und/oder zur Ausgabe des automatisch generierten Ortspseudonyms vorgesehen ist. Das Pseudonymisierungsmodul 16 sieht insbesondere vor, dass das Ortspseudonym aus zumindest einem Buchstaben besteht, wobei insbesondere zwischen Groß- und Kleinbuchstaben unterschieden wird. Ferner besteht das Ortspseudonym aus zumindest einem Wort. Ferner besteht das Ortspseudonym aus zumindest einem Sonderzeichen. Denkbar ist, dass das Ortspseudonym einen den mit Ihm verknüpften Ort 22 beschreibenden Begriff, wie beispielsweise "home", "work", einen Firmennamen und /oder mit dem jeweiligen Benutzer verknüpften Namen des Benutzers umfassen kann, wie beispielsweise, "Alice", "Bob" oder dergleichen. Für den Fall, dass ein Benutzer von selbst keinen Begriff, insbesondere keine Subadresse zuordnet, schlägt die Datenbankumgebung dem Benutzer eine Subadresse vor und/oder verknüpft diese selbstständig. Das Pseudonymisierungsmodul 16 ist vorzugsweise verschlüsselt kommunizierend mit weiteren Modulen der Datenbankumgebung 10 verbunden, wie beispielsweise dem Benutzermodul 12 und/oder dem Ortsmodul 18. Ferner ist das Pseudonymisierungsmodul 16 dazu vorgesehen, das Ortspseudonym zumindest aus einem führenden Sonderzeichen gefolgt von zumindest einem Wort zusammenzusetzen. Mittels des Pseudonymisierungsmoduls 16 sind derart zumindest 50¹⁰ einzigartige Ortspseudonyme festlegbar. Im vorliegenden Fall lautet das Ortpseudonym beispielsweise "!Alice". Das Pseudonymisierungsmodul 16 macht Ortspseudonyme verschiedener Benutzer 14, 15 einander austauschbar. Das Pseudonymisierungsmodul 16 ist vorzugsweise verschlüsselt kommunizierend mit weiteren Modulen der Datenbankumgebung 10 verbunden, wie beispielsweise dem Benutzermodul 12 und/oder dem Ortsmodul 18.

Ferner umfasst die Navigationsvorrichtung 42 zumindest ein Verlaufsmodul. Das Verlaufsmodul ist ein Modul, welches zumindest einen Datensatz vom Typ Verlaufsdaten umfasst. Verlaufsdaten sind zeitlich veränderliche Daten, welche über einen Zeitraum gesammelte Ortsdaten und Pseudonymisierungsdaten eines Benutzers 14 umfassen. Insbesondere ist das Verlaufsmodul vorzugsweise verschlüsselt kommunizierend mit weiteren Modulen der Datenbankumgebung 10 verbunden, wie beispielsweise dem Benutzermodul 12, dem Ortsmodul 18 und/oder dem Pseudonymisierungsmodul 16.

Ferner ist das Ortsmodul 18 dazu vorgesehen ist, ein selbes in dem Ortsmodul 18 umfasstes Ortspseudonym zeitabhängig mit verschiedenen Orten 22 zu verknüpfen. Für diesen Fall bilden die Ortsdaten einen vierdimensionalen Ortsdatensatz aus. In dem vierdimensionalen Ortsdatensatz ist dann zusätzlich zu der Longitude, der Latitude und der Altitude, eine Zeitinformation und zwar insbesondere eine Uhrzeit und/oder ein Zeitintervall umfasst. Denkbar ist, dass die Zeitinformation von dem Benutzer 14 hinterlegt ist. Alternativ oder zusätzlich kann die Zeitinformation anhand der Verlaufsdaten mittels des Verlaufsmoduls automatisch bestimmbar sein.

Das Ortsmodul 18 passt ferner den mit einem im Pseudonymisierungsmodul 16 hinterlegtes Ortspseudonym verknüpften Ort 22 in Abhängigkeit von einem aktuellen Standort des Benutzers 14 an. Dazu ist der Standort des Benutzers 14 insbesondere in Echtzeit von der externen Einheit 36 und/oder der Transporteinheit 38 ortbar, wodurch der Ortsdatensatz aktualisierbar ist. Der aktuelle Standort kann dann ebenfalls in dem Verlaufsmodul gespeichert werden.

Mittels des Pseudonymisierungsmoduls 16 ist der mit dem Ortspseudonym verknüpfte Ort 22 auf einer dreidimensionalen Karte 34 darstellbar. Bei der Karte 34 handelt es sich insbesondere um eine virtuelle Karte. Die Karte 34 ist beispielsweise auf einem Display, insbesondere auf einem Display der externen Einheit 36 anzeigbar. Alternativ oder zusätzlich kann die Karte eine virtuelle Realitätskarte sein, welche in eine reale Umgebung einblendbar ist.

Das Pseudonymisierungsmodul 16 macht Ortspseudonyme verschiedener Benutzer 14, 15 einander austauschbar. Das Pseudonymisierungsmodul 16 sieht eine Austauschbarkeit von Ortspseudonymen in verschiedenen Stufen vor. Beispielsweise ist vorgesehen in einer ersten Stufe ein Ortspseudonym mit allen Benutzern 14, 15 der Datenbankumgebung 10 austauschbar zu machen. Ferner kann eine zweite Stufe vorgesehen sein, in welchen nur bestimmten Benutzern 15, wie beispielsweise bestimmte Benutzer 15 einer Benutzergruppe eine Austauschbarkeit vorgesehen ist. Um einen Austausch zu vereinfachen, sieht die Datenbankumgebung 10 vor zu jedem hinterlegten Ort 22 ein URL zu erstellen, welche universell austauschbar ist.

Das Pseudonymisierungsmodul 16 ist ferner dazu vorgesehen, Ortspseudonyme und/oder Orte 22, 23 verschiedener Benutzer 14, 15 miteinander zu kombinieren und/oder zu verknüpfen. Durch eine Kombination der Ortspseudonyme verschiedener Benutzer 14, 15 eine Route zwischen Orten der verschiedenen Benutzer bestimmt werden, welche beispielsweise zu einem Transport, Anreise und/oder einer Lieferung genutzt werden kann. Zumindest zwei Ortspseudonyme sind zu diesem Zweck über ein Sonderzeichen, wie insbesondere "/" miteinander verbindbar.

Zumindest mittels des Pseudonymisierungsmoduls 16 ist eine Route zwischen zumindest zwei verschiedenen Orten 22, 23, welche mit zumindest zwei verschiedenen dreidimensionalen Ortsdatensätzen der jeweiligen Ortspseudonymen verknüpft sind, ausgebbar. Insbesondere kann zur Ausgabe die dreidimensionale Karte 34 Anwendung finden.

Die Navigationsvorrichtung 42 weist ein Verkettungsmodul (nicht dargestellt) auf. Das Verkettungsmodul legt die Route fest. Das Verkettungsmodul verknüpft die Ortspseudonyme der verschiedenen Benutzer 14, 15 manipulationssicher. Jegliche Manipulationen der Route machen selbige für die Benutzer 14, 15 unbenutzbar. Ein autorisierter Benutzer (nicht dargestellt) kann eine Verknüpfung der Route lösen. Der autorisierte Benutzer kann die Route im Anschluss an das Lösen der Verknüpfung manipulieren. Der autorisierte Benutzer kann die manipulierte Route als eine neue Route verknüpfen und den Benutzern 14, 15 zur Verfügung stellen. Alternativ und/oder zusätzlich kann der autorisierte Benutzer die Route verschlüsseln. Die Benutzung der verschlüsselten Route erfordert ein Passwort. Das Passwort kann als eine beliebige alphanumerische Zeichenfolge ausgebildet sein.

Ferner ist sind Ortspseudonyme hierarchisch kombinierbar, um einen Ort 22 genauer zu definieren. Beispielsweise kann ein hierarchisch übergeordnetes Ortspseudonym, wie beispielsweise ein Ortspseudonym, welches einem Benutzerkonto einer Institution und/oder Gebäudes mit einem hierarchisch untergeordneten Ortpseudonym eines Benutzerkontos einer Person, welcher sich bei dieser Institution und/oder in dem Gebäude aufhält kombiniert werden. Beispielsweise könnten hierarchische Ortspseudonyme durch ein Sonderzeichen miteinander verknüpfbar sein. Im vorliegenden Fall sind Ortspseudonym über das Sonderzeichen "@" kombinierbar. Dabei ist das Ortspseudonym mit einer geringeren Hierarchie an das Ortspseudonym mit einer höheren Hierarchie anhängbar.

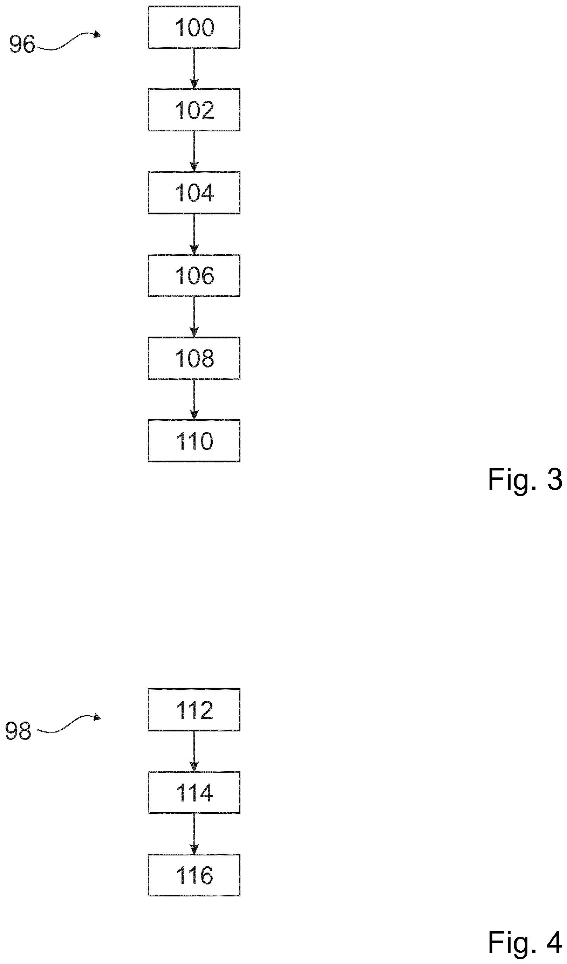

Figuren 3 und 4 zeigen schematische Ablaufpläne eines Betriebsverfahrens des Navigationssystems 44. Das Betriebsverfahren ist in der Speichereinheit hinterlegt und/oder in einer Recheneinheit ausführbar. Denkbar ist, dass dies in der Speichereinheit und/oder der Recheneinheit des Servers 46 genutzt wird. Bevorzugt wird dazu jedoch eine externe Einheit 36 wie beispielsweise ein Smartphone genutzt, wobei das Betriebsprogramm als eine App hinterlegt und ausführbar ist.

In Figur 1 ist schematisch ein Anmeldeverfahren 96 eines Benutzerkontos, welches insbesondere Teil des Betriebsverfahrens ist.

Das Verfahren umfasst zumindest einen Verfahrensschritt 100. In dem Verfahrensschritt 100 meldet sich der Benutzer 14 bei der Navigationsvorrichtung 42 an. Dazu fragt das Datenmanagement den Benutzernamen und das Passwort ab. Alternativ oder zusätzlich können bei der Anmeldung weitere Benutzerdaten des Benutzers 14 abgefragt werden, wie beispielsweise eine E-Mail Adresse oder dergleichen. Das Datenbankmanagement 58 gleicht die eingegebenen Benutzerdaten mit den in der Benutzerdatenbank hinterlegten Benutzerdaten ab. Für den Fall, dass diese übereinstimmten gewährt diese dem Benutzer 14 Zugriff auf die Datenbankumgebung 10. Für den Fall das die eingegebenen Benutzerdaten nicht mit den hinterlegten Benutzerdaten übereinstimmen gibt das Datenbankmanagement 58 eine Fehlermeldung aus oder fordert einen Benutzer 14 auf sich als ein neuer Benutzer 14 zu registrieren.

Das Verfahren umfasst einen weiteren Verfahrensschritt 102. Der weitere Verfahrensschritt 102 kann nach dem Verfahrensschritt 100 erfolgen. Alternativ kann der Verfahrensschritt 102 separat erfolgen. In dem Verfahrensschritt 102 wird eine Registrierung eines neuen Benutzers 14 durchgeführt. Das Datenbankmanagement 58 fragt Benutzerdaten des Benutzers 14 ab. Das Datenbankmanagement 58 hinterlegt die Benutzerdaten in der Benutzerdatenbank. Das Datenbankmanagement 58 erstellt einem neuen Benutzerkonto für den Benutzer 14. Alternativ kann die Registrierung vereinfacht werden, indem Benutzerdaten von einem sozialen Netzwerk oder anderen Plattformen übernommen werden.

Das Verfahren umfasst einen weiteren Verfahrensschritt 104. Der weitere Verfahrensschritt 104 kann nach dem Verfahrensschritt 102 erfolgen. Alternativ kann der Verfahrensschritt 104 nach dem Verfahrensschritt 100 erfolgen. In dem Verfahrensschritt 104 fragt das Datenbankmanagement 58 dem Benutzer 14 nach Ortsdaten eines gewünschten Orts 22. Das Datenbankmanagement 58 stellt mittels einer grafischen Oberfläche eine dreidimensionale Karte 34. In der Karte 34 kann der Benutzer 14 den Ort 22 zunächst abhängig von den Ortsinformationen markieren. Der Benutzer 14 kann den Ort 22 durch Eingabe der Ortskoordinaten spezifizieren. Vorzugsweise führt die Datenbankumgebung 10 eine automatische Bestimmung des Orts 22 und insbesondere der Ortsinformation und/oder die Ortskoordinaten mittels einer mit dem Benutzer 14 verknüpften externen Einheit 36 und/oder Transporteinheit 38 automatisch. Dazu führt die Datenbankumgebung 10 eine Ortung einer mit dem Benutzer 14 verknüpften externen Einheit 36 und/oder Transporteinheit 38 durch. Im vorliegenden Fall führt die Datenbankumgebung 10 eine Ortung mittels GNSS durch. Beispielsweise hinterlegt der Benutzer 14 einen ersten Ort. Der erste Ort ist ein Wohnsitz des Benutzers 14. Ferner hinterlegt der Benutzer einen zweiten Ort. Der zweite Ort ist ein Arbeitsort des Benutzers 14.

Das Verfahren umfasst einen weiteren Verfahrensschritt 106. In dem weiteren Verfahrensschritt 106 fragt die Datenbankumgebung 10 den Benutzer 14 nach einem Ortspseudonym, welches mit dem ersten Ort und/oder dem zweiten verknüpft werden soll. Beispielsweise hinterlegt der Benutzer 14 das Ortspseudonym "!Alice". Ferner fragt die Datenbankumgebung 10 ab ob das Ortspseudonym zeitabhängig mit den verschiedenen Orten verknüpft werden soll. Der Benutzer 14 gibt ein erstes Zeitintervall vor. In dem ersten Zeitintervall wird das Ortspseudonym mit dem ersten Ort verknüpft werden. Ferner gibt der Benutzer 14 ein zweites Zeitintervall an. In dem Zeitintervall wird das Ortspseudonym mit einem zweiten Ort verknüpft. Ferner gibt der Benutzer 14 ein drittes Zeitintervall an in dem dritten Zeitintervall wird das Ortspseudonym mit dem aktuellen Standort des Benutzers 14 verknüpft. Beispielsweise befindet sich der Benutzer 14 im ersten Zeitintervall an seinem Wohnsitz, im zweiten Zeitintervall an seinem Arbeitsort und im dritten Zeitintervall befindet er sich auf einem Weg zwischen Wohnort und Arbeitsort. Ferner fragt die Datenbankumgebung 10 ab, ob das Ortspseudonym hierarchisch einem weiteren Pseudonym untergeordnet werden soll. Dabei wird das Ortspseudonym, während dieses mit dem zweiten Ort verknüpft ist zusätzlich mit einem weiteren Ortspseudonym verknüpft. Das weitere Ortspseudonym ist beispielsweise der Name eines Gebäudes, wie beispielsweise "!Hauptquartier". Das weitere Ortspseudonym ist mit dem zweiten Ort verknüpft. Das zweite Ortspseudonym weist eine höhere Hierarchie auf als das Ortspseudonym. Das Ortspseudonym mit einer niedrigeren Hierarchie vor das Ortspseudonym mit einer höheren Hierarchie gehängt. Durch die Kombination der Ortspseudonyme können diese hierarchisch strukturiert und Orte genauer definiert werden. Die Kombination lautet im vorliegenden Fall somit beispielsweise "!Alice@!Hauptquartier". Ferner kann für eine Bestimmung des Standorts in Echtzeit ein zusätzliches Ortspseudonym hinterlegt werden, welches durch Kombination des Ortspseudonyms mit dem Begriff "@live" und/oder durch eine nach dem "@" Zeichen gefolgte zufällig generierte Zeichenfolge erzeugt wird. Demnach ergibt sich beispielsweise das zusätzliche Ortspseudonym "!Alice@live", insbesondere für das dritte Zeitintervall. Mit dem Begriff "@live" können insbesondere vom Benutzer spezifizierte andere registrierte Benutzer, also insbesondere Benutzer einer gleichen Gruppe, den Standort in Echtzeit einsehen. Insbesondere für den Fall der zufällig generierten Zeichenfolge nach dem "@" können auch weitere Benutzer, insbesondere nicht registrierte Benutzer den Standort in Echtzeit einsehen, sofern ihnen die Zeichenfolge zugänglich gemacht wird.

Das Verfahren umfasst einen weiteren Verfahrensschritt 108. In dem weiteren Verfahrensschritt 108 fragt die Datenbankumgebung 10, ob die Ortspseudonyme mit weiteren Benutzern 15 der Datenbankumgebung 10 austauschbar gemacht werden sollen. Dafür werden Austauschbarkeiten in verschiedenen Stufen vorgeschlagen. In zumindest einer ersten Stufe werden Ortspseudonyme mit allen Benutzer 14, 15der Datenbankumgebung 10 ausgetauscht. In einer zweiten Stufe werden die Ortspseudonyme nur mit Benutzern 15 einer bestimmten Gruppe ausgetauscht. In einer dritten Stufe werden Ortspseudonyme nur mit einzelnen Benutzern 15 ausgetauscht. Im vorliegenden Fall entscheidet sich der Benutzer 14 beispielsweise die Ortspseudonyme mit allen Benutzern 14, 15 auszutauschen.

Das Verfahren umfasst einen weiteren Verfahrensschritt 110. In dem weiteren Verfahrensschritt 110 wird das Anmeldeverfahren 96 beendet.

In Figur 4 ist ein Navigationsverfahren 98, insbesondere zur Bereitstellung eines Lieferservices mittels der Navigationssystems 44 dargestellt, welches insbesondere Teil des Betriebsverfahrens ist. Das Navigationsverfahren 98 kann beispielsweise nach dem oben genannten Anmeldeverfahren 96 durchgeführt werden.

Das Verfahren umfasst einen ersten Verfahrensschritt 112. In dem ersten Verfahrensschritt 112 erhält ein weiterer Benutzer 15 einen Auftrag dem Benutzer 14 eine Lieferung zukommen zulassen. Im vorliegenden Fall ist der weitere Benutzer 15 bereits in der Datenbankumgebung 10 hinterlegt. Alternativ kann der weitere Benutzer 15 das Einwahlverfahren zuvor durchführen. Der weitere Benutzer 15 ist im vorliegenden Fall mit einem Ortspseudonym "!Bob" hinterlegt. Um eine Navigation zwischen dem Ort 23 des weiteren Benutzers 15 und dem Ort 22 des Benutzers 14 zu erhalten werden deren Ortspseudonyme, insbesondere entsprechende einer Navigationsrichtung, verknüpft. Im vorliegenden Fall ergibt sich ein verknüpftes Ortspseudonym "!Bob/!Alice".

Das Verfahren umfasst einen weiteren Verfahrensschritt 114. In dem weiteren Verfahrensschritt 114 wird mittels der verknüpften Ortspseudonyme eine Route zwischen diesen berechnet und ausgegeben. Die Route wird dabei dem weiteren Benutzer 15 auf einer dreidimensionalen Karte 34 angezeigt. Beispielsweise wird zur Anzeige der Route auf einer Karte 34 ein Display einer mit dem weiteren Benutzer 15 verknüpften externen Einheit 36 verwendet. Der weitere Benutzer 15 kann entsprechend der ausgegebenen Route eine passende Transporteinheit 38 für eine Lieferung auswählen. Im vorliegenden Fall wird einen als, insbesondere autonome, Drohne ausgebildete Transporteinheit 38 ausgewählt.

Das Verfahren umfasst einen weiteren Verfahrensschritt 116. In dem Verfahrensschritt 116 wird die zuvor berechnete Route an die Transporteinheit 38 übermittelt. Die Transporteinheit 38 führt die Lieferung entsprechend der vorgegebenen Route zwischen den mit den Ortspseudonymen der Benutzer 14, 15 verknüpften Orten 22, 23 aus.

## Patentansprüche

1. Navigationsvorrichtung (42) mit zumindest einer Datenbankumgebung (10) umfassend zumindest ein Benutzermodul (12), das Benutzerdaten zumindest eines Benutzers (14) aufweist, zumindest ein Pseudonymisierungsmodul (16), mittels welchem wenigstens ein mit zumindest den Benutzerdaten des Benutzers (14) verknüpftes Ortspseudonym festlegbar ist, und zumindest ein Ortsmodul (20), welches das zumindest eine Ortspseudonym mit Ortsdaten zumindest eines Orts (22) verknüpft, wobei das Ortspseudonym mittels des Pseudonymisierungsmoduls von dem Benutzer (14) festlegbar ist, wobei das Ortsmodul (20) wenigstens einen zumindest dreidimensionalen Ortsdatensatz umfasst, **dadurch gekennzeichnet, dass** zumindest mittels des Pseudonymisierungsmoduls (16) eine Route zwischen zumindest zwei verschiedenen Orten (22, 23), welche mit zumindest zwei verschiedenen dreidimensionalen Ortsdatensätzen der jeweiligen Ortspseudonymen verknüpft sind, ausgebbar ist, wobei nicht nur zweidimensionale Daten zur Bestimmung einer schnellsten Route berücksichtigt werden, sondern auch dreidimensionale Daten, wobei das Ortsmodul (20) zur Ermittlung einer in einem der Ortsdatensätze des Ortsmoduls (20) hinterlegten Altitude eine Stockwerksangabe eines mit dem Ort (22) verknüpften Gebäudes berücksichtigt.

2. Navigationsvorrichtung (42) nach Anspruch 1, **dadurch gekennzeichnet, dass** das Ortsmodul (20) vorsieht den Ort (22) mit einem Standort innerhalb eines Gebäudes zu verknüpfen.

3. Navigationsvorrichtung (42) nach einem der vorhergehenden Ansprüche,
**dadurch gekennzeichnet, dass** Ortsmodul (20) dazu vorgesehen ist, dasselbe Ortspseudonym zeitabhängig und/oder kontextabhängig mit verschiedenen Orten (22, 23) zu verknüpfen.

4. Navigationsvorrichtung (42) nach einem der vorhergehenden Ansprüche,
**dadurch gekennzeichnet, dass** das Ortsmodul (20) dazu vorgesehen ist, den mit dem Ortspseudonym verknüpften Ort (22) in Abhängigkeit von einem aktuellen Aufenthaltsort des Benutzers (14) anzupassen.

5. Navigationsvorrichtung (42) nach einem der vorhergehenden Ansprüche, **gekennzeichnet durch** zumindest ein Kodiermodul, welches dazu vorgesehen ist, die Ortsdaten als zumindest einen Ortscode zu kodieren, wobei ein Ortscode eine Kette von Buchstaben und/oder Symbolen und/oder Zahlen ist, welche die Ortsdaten in einer, insbesondere durch Recheneinheiten, lesbaren Form repräsentiert.

6. Navigationsvorrichtung (42) nach einem der vorhergehenden Ansprüche,
**dadurch gekennzeichnet, dass** das Pseudonymisierungsmodul (16) dazu vorgesehen ist, das Ortspseudonym zumindest aus einem führenden Sonderzeichen gefolgt von zumindest einem Wort zusammenzusetzen.

7. Navigationsvorrichtung (42) nach einem der vorhergehenden Ansprüche,
**dadurch gekennzeichnet, dass** das Pseudonymisierungsmodul (16) dazu vorgesehen ist, Ortspseudonyme und/oder Orte (22, 23) verschiedener Benutzer (14, 15) miteinander zu kombinieren und/oder zu verknüpfen.

8. Navigationsvorrichtung (42) nach einem der vorhergehenden Ansprüche,
**dadurch gekennzeichnet, dass** das Pseudonymisierungsmodul (16) Ortspseudonyme verschiedener Benutzer (14, 15) einander austauschbar macht.

9. Navigationsvorrichtung (42) nach einem der vorhergehenden Ansprüche, **gekennzeichnet durch** zumindest ein Verkettungsmodul, welches die Route durch eine manipulationssichere Verknüpfung der Ortsdatensätze und/oder Ortspseudonyme der Orte (22, 23) festlegt.

10. Navigationsvorrichtung (42) nach einem der vorhergehenden Ansprüche,
**dadurch gekennzeichnet, dass** das Ortsmodul (20) vorsieht Sensordaten eines mit dem Benutzer (14) verknüpften externen Einheit (36) und/oder eines Transporteinheit (38) zur Bestimmung und/oder Abgleich des mit dem Ortspseudonym verknüpften Ortsdatensatzes zu verwenden.

11. Navigationsvorrichtung (42) nach Anspruch 10, **dadurch gekennzeichnet, dass** die externe Einheit (36) und/oder die Transporteinheit (38) zumindest eine Sensoreinheit (62, 64) umfasst, welche zumindest einen Sensor zur Erfassung der Sensordaten umfasst, welcher zu einer Ortung vorgesehen ist.

12. Navigationsvorrichtung (42) nach Anspruch 10 oder 11, **dadurch gekennzeichnet, dass** die Transporteinheit (38) als eine Drohne ausgebildet ist.

13. Navigationssystem (44) mit der Navigationsvorrichtung (42) nach einem der vorhergehenden Ansprüche, **gekennzeichnet durch** zumindest eine externe Einheit (36) und/oder zumindest eine Transporteinheit (38).

## Claims

1. Navigation device (42) with at least one database environment (10),
which has
at least one user module (12) comprising user data of at least one user (14), at least one pseudonymization module (16) by means of which at least one location pseudonym can be defined that is linked at least with the user data of the user (14), and
at least one location module (20) which links the at least one location pseudonym with location data of at least one location (22),
wherein the location pseudonym can be defined by the user (14) by means of the pseudonymization module,
wherein the location module (20) comprises at least one at least three-dimensional location dataset,
**characterised in that** at least by means of the pseudonymization module (16) a route between at least two different locations (22, 23), which are linked with at least two different three-dimensional location datasets of the respective location pseudonyms, can be outputted,
wherein for a determination of a fastest route not only two-dimensional data but also three-dimensional data are considered,
wherein for a determination of an altitude that is stored in one of the location datasets of the location module (20), the location module (20) considers a floor information of a building that is linked with the location (22).

2. Navigation device (42) according to claim 1,
**characterised in that** the location module (20) provides linking of the location (22) to a position within a building.

3. Navigation device (42) according to one of the preceding claims,
**characterised in that** the location module (20) is configured for linking the same location pseudonym to different locations (22, 23) depending on time and/or context.

4. Navigation device (42) according to one of the preceding claims,
**characterised in that** the location module (20) is configured to adapt the location (22) that is linked with the location pseudonym depending on a current whereabouts of the user (14).

5. Navigation device (42) according to one of the preceding claims,
**characterised by** at least one encoding module, which is configured for encoding the location data as at least one location code, a location code being a chain of letters and/or symbols and/or numbers which represents the location data in a form that is readable, in particular by computing units.

6. Navigation device (42) according to one of the preceding claims,
**characterised in that** the pseudonymization module (16) is configured to compose the location pseudonym at least of a leading special character followed by at least one word.

7. Navigation device (42) according to one of the preceding claims,
**characterised in that** the pseudonymization module (16) is configured to combine and/or link location pseudonyms and/or locations (22, 23) of different users (14, 15) with one another.

8. Navigation device (42) according to one of the preceding claims,
**characterised in that** the pseudonymization module (16) makes location pseudonyms of different users (14, 15) exchangeable with one another.

9. Navigation device (42) according to one of the preceding claims,
**characterised by** at least one chaining module which defines the route by manipulation-safe linking of the location datasets and/or location pseudonyms of the locations (22, 23).

10. Navigation device (42) according to one of the preceding claims,
**characterised in that** the location module (20) provides a utilization of sensor data of an external unit (36) that is linked with the user (14) and/or of a transport unit (38) for a determination and/or matching of the location dataset that is linked with the location pseudonym.

11. Navigation device (42) according to claim 10,
**characterised in that** the external unit (36) and/or the transport unit (38) have/has at least one sensor unit (62, 64) comprising at least one sensor for a detection of the sensor data, said sensor being configured for a localisation.

12. Navigation device (42) according to claim 10 or 11,
**characterised in that** the transport unit (38) is realized as a drone.

13. Navigation system (44) with the navigation device (42) according to one of the preceding claims,
**characterised by** at least one external unit (36) and/or at least one transport unit (38).

## Revendications

1. Dispositif de navigation (42)
avec au moins un environnement de base de données (10) incluant
au moins un module d'utilisateur (12) qui comprend des données d'utilisateur d'au moins un utilisateur (14),
au moins un module de pseudonymisation (16) par le biais duquel au moins un pseudonyme d'endroit relié au moins avec les données d'utilisateur de l'utilisateur (14) peut être défini,
et au moins un module de localisation (20) reliant l'au moins un pseudonyme d'endroit avec des données d'endroit d'au moins un endroit (22),
où le pseudonyme d'endroit peut être défini par l'utilisateur (14) moyennant le module de pseudonymisation,
le module de localisation (20) comprenant au moins un jeu de données d'endroit au moins tridimensionnel,
**caractérisé en ce que** moyennant au moins le module de pseudonymisation (16) une route entre au moins deux endroits différents (22, 23), qui sont reliés avec au moins deux différents jeux de données d'endroit tridimensionnels des pseudonymes d'endroit respectifs, peut être délivrée,
où ce ne sont pas seulement des données bidimensionnelles qui sont considérées pour identifier la route la plus rapide mais aussi des données tridimensionnelles,
où pour la détermination d'une altitude stockée dans l'un des jeux de données d'endroit du module de localisation (20), le module de localisation (20) considère une information d'étages d'un immeuble relié avec l'endroit (22).

2. Dispositif de navigation (42) selon la revendication 1,
**caractérisé en ce que** le module de localisation (20) pourvoit à ce que l'endroit (22) soit relié avec une position dans un immeuble.

3. Dispositif de navigation (42) selon l'une des revendications précédentes,
**caractérisé en ce que** le module de localisation (20) est destiné à relier le même pseudonyme d'endroit avec des endroits différents (22, 23) en fonction du temps et/ou du contexte.

4. Dispositif de navigation (42) selon l'une des revendications précédentes,
**caractérisé en ce que** le module de localisation (20) est prévu pour adapter l'endroit (22) reliée avec le pseudonyme d'endroit en fonction d'un endroit de séjour actuel de l'utilisateur (14).

5. Dispositif de navigation (42) selon l'une des revendications précédentes,
**caractérisé par** au moins un module de codage prévu pour coder les données d'endroit comme au moins un code de localisation, un code de localisation étant une chaîne de lettres et/ou de symboles et/ou de chiffres représentant les données d'endroit en forme lisible, en particulier lisible par des unités de calcul.

6. Dispositif de navigation (42) selon l'une des revendications précédentes,
**caractérisé en ce que** le module de pseudonymisation (16) est prévu pour composer le pseudonyme d'endroit au moins d'un caractère spécial en avant suivi par au moins un mot.

7. Dispositif de navigation (42) selon l'une des revendications précédentes,
**caractérisé en ce que** le module de pseudonymisation (16) est destiné à combiner et/ou relier des pseudonymes d'endroit et/ou des endroits (22, 23) d'utilisateurs différents (14, 15).

8. Dispositif de navigation (42) selon l'une des revendications précédentes,
**caractérisé en ce que** le module de pseudonymisation (16) rend des pseudonymes d'endroit d'utilisateurs différents (14, 15) échangeables l'un contre l'autre.

9. Dispositif de navigation (42) selon l'une des revendications précédentes,
**caractérisé par** au moins un module d'enchaînement qui défini la route moyennant une liaison, sécurisée contre la manipulation, des jeux de données d'endroit et/ou des pseudonymes d'endroit des endroits (22, 23).

10. Dispositif de navigation (42) selon l'une des revendications précédentes,
**caractérisé en ce que** le module de localisation (20) pourvoit à ce que des données de captage d'une unité externe (36) reliée avec l'utilisateur (14) et/ou d'une unité de transport (38) soient utilisées pour la détermination et/ou l'appariement du jeu de données d'endroit relié avec le pseudonyme d'endroit.

11. Dispositif de navigation (42) selon la revendication 10,
**caractérisé en ce que** l'unité externe (36) et/ou l'unité de transport (38) comprend au moins une unité captrice (62, 64) comprenant au moins un capteur pour le captage des données de captage, ledit capteur étant prévu pour une localisation.

12. Dispositif de navigation (42) selon la revendication 10 ou 11,
**caractérisé en ce que** l'unité de transport (38) est réalisée comme drone.

13. Système de navigation (44) avec un dispositif de navigation (42) selon l'une des revendications précédentes,
**caractérisé par** au moins une unité externe (36) et/ou au moins une unité de transport (38).
